## Europäisches Patentamt

## European Patent Office

## Office européen des brevets

(11) Veröffentlichungsnummer: **0 198 448**
**A1**

# (12) EUROPÄISCHE PATENTANMELDUNG

(21) Anmeldenummer: **86105017.7**

(22) Anmeldetag: **11.04.86**

(51) Int. Cl.⁴: **H 04 B 7/24,** H 04 H 3/00

(30) Priorität: **19.04.85 CH 1696/85**

(43) Veröffentlichungstag der Anmeldung: **22.10.86**
**Patentblatt 86/43**

(84) Benannte Vertragsstaaten: **AT BE CH DE FR GB IT LI LU NL SE**

(71) Anmelder: **Firma Erika Köchler, Swissphone Telecommunications Fälmistrasse 21, CH-8833 Samstagern (CH)**

(72) Erfinder: **Köchler, Helmut, Fälmistrasse 21, CH-8833 Samstagern (CH)**

(74) Vertreter: **Blum, Rudolf Emil Ernst et al, c/o E. Blum & Co Patentanwälte Vorderberg 11, CH-8044 Zürich (CH)**

(54) **Verfahren zur Synchronisation mehrerer taktgesteuerter Sender-Empfänger.**

(57) Mehrere taktgesteuerte Sende-Empfangseinrichtungen (1, 2, 3) werden synchronisiert, indem der synchronisierende Sender eine Synchronisationsmeldung abgibt, welche den Empfängern eine Grobsynchronisation ermöglicht. Danach wird die effektive Sender-Empfängerlaufzeit (Tt + tt, Tr + tr) der zu synchronisierenden Sende-Empfangseinrichtungen (2, 3) gemessen, was eine Korrektur der Sendertakte zur genauen Synchronisation ermöglicht. Auf diese Weise ist eine einfache und genaue Sendersynchronisation möglich.

- 1 -

Verfahren zur Synchronisation mehrerer
taktgesteuerter Sender-Empfänger

--------------------------------------------

Die Erfindung betrifft ein Verfahren zur
Synchronisation einer Mehrzahl taktgesteuerter Sende-
Empfangseinrichtungen. Ferner betrifft die Erfindung
eine Sende-Empfangseinrichtung zur Durchführung des Verfahrens sowie eine Anwendung des Verfahrens bei einem
Funkrufnetz.

Bei einem Einsatz mehrerer Funksender, welche
ein Gebiet flächendeckend mit dem gleichen Signal versorgen, kann sich das Problem der Synchronisation der
Sender ergeben, dies z.B. bei einem Ortsrufnetz, bei dem
digitale Erkennungskodes für die einzelnen Rufempfänger
gesendet werden.

Die Synchronisation, von der hier die Rede
ist, bezieht sich dabei auf die Modulation der Sender,
nicht auf den HF-Träger. Die HF-Träger werden frei laufengelassen und, wenn nötig, mit einem gewissen Frequenzversatz betrieben, damit sich keine stehenden Wellen
ausbilden, die zu "Löchern" im Versorgungsgebiet führen.

Solange z.B. ein Rufempfänger (Pager) nur
von einem Sender Signale empfängt, stellt sich das Synchronisationsproblem nicht. Sobald er sich jedoch im

Slc/str

4.4.86                                    EH 1296

gemeinsamen Versorgungsgebiet zweier oder mehrerer Sender befindet, die nicht synchron arbeiten, wird er grosse Probleme haben, die empfangenen Signale richtig zu detektieren. In den meisten Fällen ist es ja aus Gründen der Versorgungssicherheit sehr erwünscht, dass sich die Versorgungsgebiete der einzelnen Sender überlappen.

Es gibt natürlich auch Möglichkeiten, ohne Synchronisation auszukommen, jedoch haben alle diese Varianten grosse Nachteile, vor allem bezüglich Frequenz- und Zeitökonomie.

Bei bekannten Funkeinrichtungen mit mehreren Sendern sind diese über Modulationsleitungen direkt mit der Signalquelle, z.B. mit der Rufzentrale eines Funkrufnetzes, verbunden. Die Leitungen werden mit Laufzeitreglern versehen, die eine gewisse Kompensation der unterschiedlichen Distanzen zwischen Rufzentrale und Sendern ermöglichen.

Abgeglichen wird vielfach aber nur die Strecke bis zum Sendereingang. Für die Synchronisation sind jedoch die Signale an den Antennen massgebend, so dass die unterschiedlichen Laufzeiten in den Sendern nicht berücksichtigt werden.

Ein wesentlicher Nachteil dieses Verfahrens ist, dass sich die Eigenschaften der Modulationsleitungen und der beteiligten Geräte infolge von Witterungseinflüssen, Temperatur und Alterung laufend verändern. Es ergibt sich daraus ein relativ grosser Aufwand für das periodische Justieren der Anlage.

Fällt eine Leitung aus, muss die Ersatzleitung in jedem Fall neu eingeregelt werden.

Es stellt sich deshalb die Aufgabe, ein Synchronisationsverfahren zu schaffen, welches diese Nachteile nicht aufweist und eine einfache und genaue Synchronisation ermöglicht. Dies wird mit den Merkmalen des kennzeichnenden Teils des Patentanspruches 1 erreicht.

Ferner stellt sich die Aufgabe, eine Sende-Empfangsanlage zu schaffen zur Durchführung des Verfahrens nach Anspruch 1. Dies wird mit den kennzeichnenden Merkmalen des Anspruches 7 erreicht.

Ferner zeigt die Erfindung die Anwendung des Verfahrens bei einem Funkrufnetz.

Im folgenden werden Ausführungsarten des erfindungsgemässen Verfahrens und der Sende-Empfangseinrichtung anhand der Zeichnungen beispielsweise erläutert. Dabei zeigen:

Fig. 1 schematisch drei Sender-Empfänger zur Erläuterung des Verfahrens;

Fig. 2 schematisch drei Sender-Empfänger in einer weiteren Konfiguration zur Erläuterung des Verfahrens;

Fig. 3 ein Blockschema einer Sende-Empfangseinrichtung zur Durchführung des Verfahrens, und

Fig. 4 ein Blockschema eines Funkrufnetzes, bei dem das Verfahren anwendbar ist.

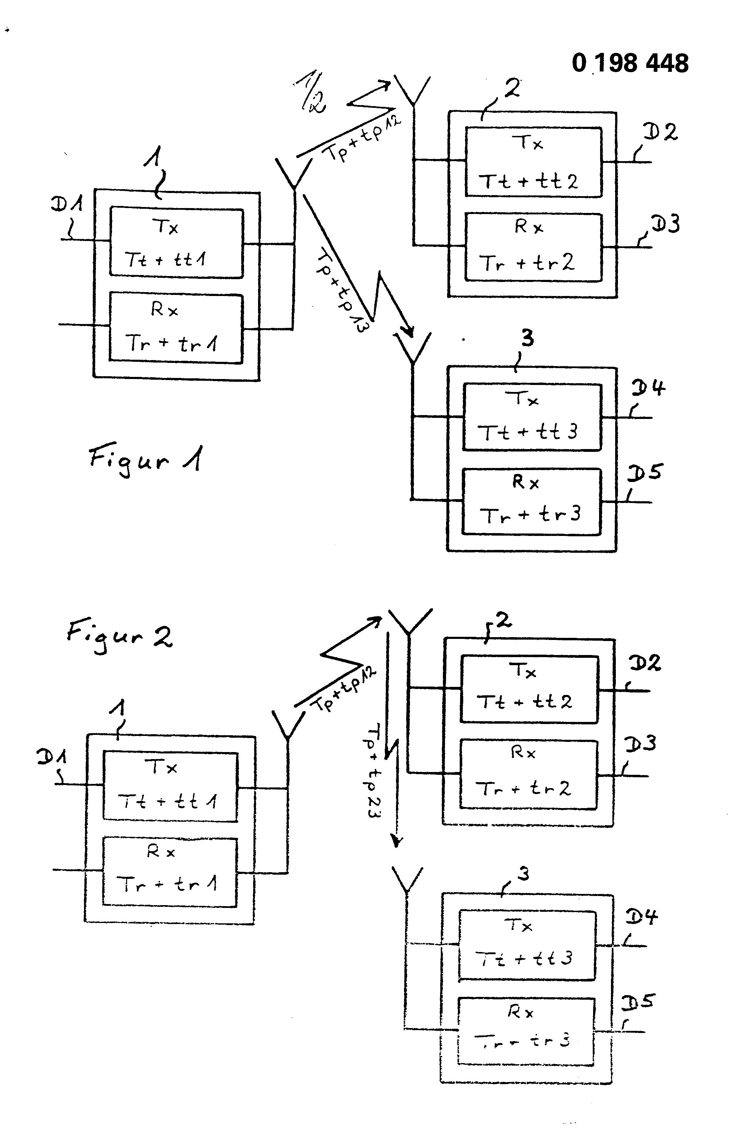

Fig. 1 zeigt drei Sender-Empfänger 1,2,3, welche im folgenden in Uebereinstimmung mit der Bezeichnung beim nachfolgend beschriebenen Funkrufnetz als Basisstationen 1,2,3 bezeichnet werden sollen. Eine synchronisierende Basisstation wird im folgenden mit Master bezeichnet, eine zu synchronisierende als Slave. Im dargestellten Beispiel sollen die taktgesteuerten Basisstationen digitale Mitteilungen, z.B. den Code für Ortsrufempfänger, abstrahlen und werden deshalb als synchronisiert bezeichnet, wenn die von der Antenne abgestrahlten Signale sowohl bezüglich der einzelnen Bits (als auch bezüglich ganzer Mitteilungen synchron sind. Zu diesem Zweck müssen die Takte der einzelnen Basisstationen periodisch synchronisiert werden, da die Taktgeneratoren keinen idealen Gleichlauf erzielen.

Zur Synchronisation sendet der Master zunächst eine spezielle Synchronisationsmeldung, die es dem Slave ermöglicht, sowohl auf Bitebene als auch auf der Ebene einer ganzen Meldung mit dem Master im Gleichlauf zu gelangen. Ohne besondere Massnahmen ergibt sich dabei jedoch ein beträchtlicher Fehler, wie die folgende Rechnung zeigt.

Es sollen die zwei Slaves 2,3 auf den Master 1 synchronisiert werden. Mit Tx ist der Sender, mit Rx der Empfänger jeder Basisstation bezeichnet. Mit $D_1$, $D_2$, $D_4$ sind die digitalen Sendereingänge der Basisstation 1,2,3 und mit $D_3$, $D_5$ die digitalen Empfängerausgänge der Basisstationen 2,3 bezeichnet. Im dargestellten Beispiel sind die räumlich getrennten Basisstationen mittels der durch Pfeile dargestellten Funkverbindung miteinander verbunden.

Ferner bedeuten in Fig. 1:

| | |
|---|---|
| Tt | Transmitter delay time (nominelle Signalverzögerungszeit vom digitalen Sendereingang bis zur Antenne) |
| tt | Toleranz von Tt (spezifiziert als $\pm$ 40 µs) |
| Tr | Receiver delay time (nominelle Signalverzögerungszeit von der Antenne bis zum digitalen Ausgang des Empfängers) |
| tr | Toleranz von Tr (spezifiziert als $\pm$40 µs) |
| Tp | Propagation delay time (Signallaufzeit in der Atmosphäre für eine Nenndistanz von z.B. 30 km zwischen zwei Basisstationen) |
| tp | Abweichung der effektiven Laufzeit zwischen zwei Basisstationen von der Nennlaufzeit (bei Distanzabweichungen von $\pm$ 10 km ergibt sich eine Laufzeittoleranz von $\pm$ 33 µs) |

Die Indizes 1,2 und 3 beziehen sich auf die Nummer der
Basisstation.

Für die Basisstation 2 resultiert die folgende Zeitdifferenz zwischen den Signalen D1 und D3:

$$(Tt + tt1) + (Tp + tp12) + (Tr + tr2)$$

Analog resultiert für die Basisstation 3 (Differenz
zwischen Signalen D1 und D5):

$$(Tt + tt1) + (Tp + tp13) + (Tr + tr3)$$

Senden nun die derart grob synchronisierten Basisstationen "gleichzeitig" die gleiche Rufmeldung, dann ergeben sich für die zeitlichen Verzögerungen der Antennensignale gegenüber dem Signal an D1:

$$BS\ 1:\ (Tt + tt1)$$
$$BS\ 2:\ (Tt + tt1) + (Tp + tp12) + (Tr + tr2) + (Tt + tt2)$$

$$BS\ 3:\ (Tt + tt1) + (Tp + tp\ 13) + (Tr + tr3) + (Tt + tt3)$$

Die nominellen Werte Tt, Tr und Tp sind bekannt
und können deshalb in jeder Basisstation vor dem Senden
berücksichtigt werden. Für die zeitliche Verzögerung der
Signale an den Antennen der Basisstationen 2 und 3 gegenüber der Antenne der Basisstation 1 erhält man mit dieser
Kompensation aber immer noch:

$$BS\ 2:\ tp12 + tr2 + tt2$$
$$BS\ 3:\ tp13 + tr3 + tt3$$

Nimmt man nun an, ein Rufempfänger befinde sich im gemeinsamen Versorgungsgebiet der Basisstationen 2 und 3, dann ist die Zeitdifferenz zwischen den empfangenen Signalen im schlimmsten Fall:

$$(tpl2 + tr2 + tt2) + (tpl3 + tr3 + tt3) = 226 \ \mu s$$

Diese Zeitdifferenz kann bereits eine eindeutige Erkennung einer ausgesendeten digitalen Meldung beeinträchtigen. Wenn bei einem ganzen zu synchronisierenden Sendernetz, z.B. einem Funkrufnetz, die synchronisierten Basisstationen 2 und 3 in einer zweiten Synchronisationsphase ihrerseits zum Master werden, verdoppelt sich diese Zeitdifferenz. In Funkrufnetzen sind die Meldungsprotokolle (z.B. im bekannten postalisch spezifizierten POCSAG-Format) und auch die geforderte Synchronisationsgenauigkeit bestimmt. Diese beträgt z.B. 1/4 Bit, was bei 512 Bit/s einer Zeitdifferenz von 488 $\mu s$ entspricht, und ist, wie die obige Rechnung zeigt, bereits in der zweiten Synchronisationsphase nicht mehr gewährleistet. Dabei sind Genauigkeit und Drift der Taktoszillatoren noch nicht in die Rechnung einbezogen worden.

Beim erfindungsgemässen Verfahren wird deshalb bei jeder Synchronisation die wahre Laufzeit von Sender und Empfänger der zu synchronisierenden Basisstation bestimmt und dieser Messwert zur Korrektur der Taktsignalsynchronisation verwendet. Dabei ist es nicht nötig, die Laufzeiten des Senders und Empfängers einzeln zu bestimmen: es genügt, deren Summe zu kennen, wie im folgenden noch gezeigt wird.

Die Messung der Tx/Rx-Laufzeit geht beispielsweise folgendermassen vor sich (Beispiel BS 2):

Der Sender strahlt als Messmeldung ein 1010 ..

Bitmuster aus. Dieses Bitmuster kann auch vom eigenen Empfänger gehört werden, obschon er von der Antenne getrennt ist, während "sein" Sender auf Sendung ist. Gleichzeitig mit der positiven Flanke eines Bits an D2 wird in der Sende-Empfangseinrichtung ein Zähler gestartet (Auflösung 625 ns), der solange läuft, bis das empfangene Signal an D3 ebenfalls 1 ist. Die so gemessene Zeit ist die Summe der Laufzeiten des Senders und Empfängers

$$(Tt + tt2) + (Tr + tr2).$$

Bei einer bevorzugten Ausführungsart des Verfahrens wird ferner der Uebertragungsweg (Tp + tp) ebenfalls berücksichtigt, wobei nicht mit Nennlaufzeiten in der Atmosphäre gerechnet wird, sondern die exakten Distanzen zwischen den Basisstationen zur Korrekturtermberechnung verwendet werden.

Der Korrekturterm, um den die BS 2 ihren Sendetakt korrigieren muss, lautet dan:

$$(Tp + tp12) + (Tt + tt2) + (Tr + tr2).$$

Analog ergibt sich für den Korrekturterm für die BS 3:

$$(Tp + tp13) + (Tt + tt3) + (Tr + tr3).$$

Die Wirkung dieser Korrekturen wird im folgenden anhand des am Anfang angeführten Beispiels demonstriert.

Die Basisstation 1 sendet ihre Synchronisationsmeldung. Die Basisstationen 2 und 3 synchronisieren sich darauf, vorerst ohne irgendeine Korrektur anzubringen. Ihr Sendetakt wäre deshalb um die im Beispiel angegebenen Werte gegenüber dem Takt von BS 1 verzögert.

Die Basisstationen 2 und 3 kennen die Distanz
bzw. Laufzeit zur Basisstation 1. Sie führen die oben beschriebene Messung der Tx/Rx-Verzögerungszeit durch.
Danach korrigieren sie ihren Sendetakt gemäss oben angegebenem Korrekturterm. Daraus ergibt sich für die Verzögerung der Antennensignale gegenüber dem Signal an D1:

BS 1: $(Tt + tt1)$

BS 2: $(Tt + tt1) + (Tp + tp12) + (Tr + tr2) + (Tt+tt$

$- (Tp + tp12) - (Tt + tt2) + (Tr+tr$

$= (Tt + tt1)$

BS 3: $(Tt + tt1) + (Tp + tp13) + (Tr + tr3) + (Tt + tt3)$

$- (Tp + tp13) - (Tt + tt3) - (Tr + tr3)$

$= (Tt + tt1)$

Die Verzögerungen der Antennensignale gegenüber
D1 sind also für alle Basisstationen gleich gross, d.h.
die Antennensignale sind exakt synchron.

Dasselbe ergibt sich, wenn mehrere Synchronisationsphasen hintereinander durchgeführt werden.

Als Beispiel sei angenommen, dass die Basisstation 2 in einer ersten Phase von der Basisstation 1
synchronisiert wird, und die Basisstation 2 in einer zweiten Phase die Basisstation 3 synchronisiert, wie in Fig.
2 dargestellt.

Zuerst synchronisiert die Basisstation 1 die
Basisstation 2. Die Verzögerung des Antennensignals von
Basisstation 2 gegenüber dem Signal an D1 ist

$(Tt + tt1) + (Tp + tp12) + (Tr + tr2) + (Tt + tt2)$

nach der Korrektur:

$$(Tt + tt1)+(Tp + tp12)+(Tr + tr2)+(Tt + tt2)$$
$$-(Tp + tp12)-(Tt + tt2)-(Tr + tr2)$$
$$=(Tt + tt1)$$

Die Basisstation 2 ist demzufolge mit der Basisstation 1 synchronisiert. Die Basisstation 2 synchronisiert nun auf gleiche Weise die Basisstation 3. Die Verzögerung des Antennensignals von Basisstation 3 gegenüber dem Signal D1 ist

ohne Korrektur:

$$(Tt + tt1)+(Tp + tp23)+(Tr + tr3)+(Tt + tt3)$$

nach der Korrektur:

$$(Tt + tt1)+(Tp + tp23)+(Tr + tr3)+(Tt + tt3)$$
$$-(Tp + tp23)-(Tt + tt3)-(Tr + tr3)$$
$$=(Tt + tt1)$$

Selbstverständlich führt der erste Master keine Korrektur aus. Auch hier sind also alle Antennensignale exakt synchron, und die Reihe liesse sich beliebig fortsetzen.

Da in der Realität vor allem die Qualität der Funkübertragungsstrecke in die Genauigkeit der Synchronisation eingeht, heist "exakt synchron" in der Praxis, dass die Signale höchstens um einige Mikrosekunden voneinander abweichen.

Geht man von einer Abweichung von maximal +20 µs aus, bleiben für die Drift des Taktoszillators noch +219µs bis zum Erreichen der 1/4 Bit-Grenze (bei 512 Bit/s). Mit einer Abweichung des Oszillators von 0,3 ppm,ergibt sich eine Wiederholrate der Synchronisation von ca. 12 Minuten. Diese Zeit kann verlängert werden, indem die Slaves ihre Oszillatorabweichung zwischen zwei Synchronisationen bestimmen und ihren Sendetakt periodisch entsprechend korrigieren.

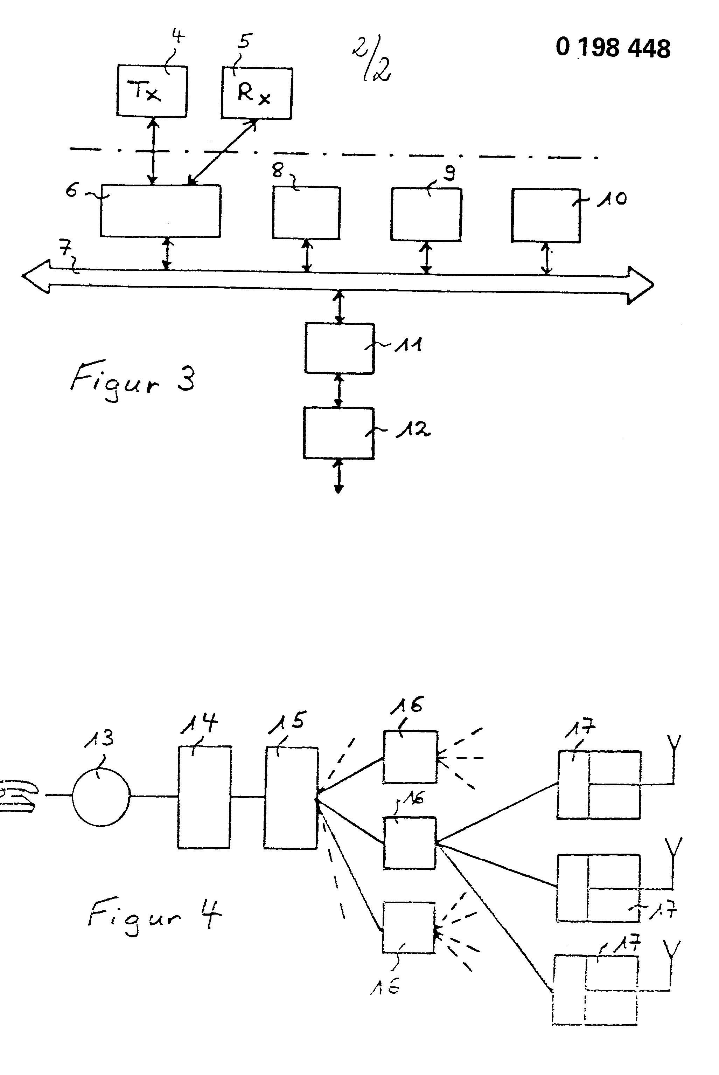

In der Figur 3 ist als Beispiel eine Sende-Empfangseinrichtung eines Funkrufnetzes zur Durchführung des Verfahrens schematisch gezeigt. Der Sender 4 und der Empfänger 5 sind dabei über eine Schnittstelle 6 mit einem Bus 7 verbunden. Weiterhin an dem Bus 7 liegen ein Speicher 8, Timerschaltungen 9 und ein Mikroprozessor 10 sowie eine Steuerschaltung 11, welche mit einem Modem 12 verbunden ist, das die Verbindung zur Signalquelle für die zu sendenden Rufmeldungen herstellt. Die unterhalb der strichpunktierten Linie gezeigten Blöcke bilden die Schnittstelle TSI (Transmitter site interface) der Sende-Empfangseinrichtung. Der Sender und Empfänger müssen zur Durchführung der Laufzeitmessung so verbindbar sein, dass das Antennensendesignal auch an den Empfängerantenneneingang gelangt. Ueber die Schnittstelle 6 steuert der Mikroprozessor 10 Sender und Empfänger. Der Mikroprozessor 10 führt ebenfalls die Messung der Sender- und Empfängerlaufzeit durch und benützt die Messwerte zusammen mit Entfernungsdaten aus dem Speicher 8, wie vorstehend geschildert, zur Korrektur des Taktgebers in der Timerschaltung 9.

Im folgenden wird eine Anwendung des Verfahrens bei einem Funkrufsystem, wie schematisch in Fig. 4 gezeigt, beschrieben. Das Funkrufsystem besteht im wesentlichen aus einer mit dem öffentlichen Telefonnetz 13 verbundenen Funkrufzentrale 14 (paging terminal) sowie dem Rufnetzwerk. Das Rufnetzwerk (paging network) setzt sich aus einer Netzsteuereinheit 15 (paging network unit), mehreren damit verbundenen Sendergruppensteuereinrichtungen 16 (transmitter group controllers) und einer Mehrzahl von Basisstationen 17 zusammen. Die Basisstationen 17 sind in Gruppen zusammengefasst und jeweils mit der Sendergruppensteuereinrichtung 16 dieser Gruppe verbunden. Die Basisstationen wiederum sind, wie vorstehend erläutert, in die Schnittstelle (TSI) und Sender-Empfänger unterteilt.

Die Funkrufzentrale bildet die Schnittstelle zum öffentlichen Telefonnetz. Sie verwaltet die Teilnehmerdaten und setzt die ankommenden Anrufe in serielle Datenströme (z.B. ins erwähnte POCSAG-Forma) um.

Das Netzwerk ist hierarchisch aufgebaut. Die einzelnen Einheiten sind über Modemleitungen miteinander verbunden, auf denen sie in rein digitaler Form miteinander kommunizieren. Es werden dauernd Befehle, Meldungen über den Systemzustand und, wenn nötig, Alarmmeldungen ausgetauscht.

Alle Rufmeldungen werden sowohl in der Netzsteuereinheit als auch in den Sendergruppensteuereinrichtungen 16 und TSI's zwischengespeichert, und es
gibt für eine Rufmeldung keinen direkten Zusammenhang
zwischen ihrer Ankunftszeit in der Basisstation und der
Zeit ihrer Ausstrahlung durch den Sender.

Hingegen wird durch die Synchronisation
garantiert, dass eine bestimmte Rufmeldung von allen
Sendern zur gleichen Zeit ausgestrahlt wird.

Die Rufmeldung enthält die Kodeinformation
für die nicht dargestellten Rufempfänger, die sich im
Bereich des Funkrufnetzes aufhalten.

Synchronisiert wird das Rufnetzwerk in
mehreren Phasen. Ein erster Master synchronisiert alle
Basisstationen, die ihn "hören" können. Diese Slaves
werden in der nächsten Phase ihrerseits zum Master und
synchronisieren die ihnen zugeordneten Slaves. Die
Synchronisation bereitet sich somit wellenartig über
das ganze Netz aus.

Die ganze Synchronisationsprozedur wird
zentral von der Netzsteuereinheit gesteuert. Sie gliedert sich in einen Vorbereitungsteil und einen Ausführungsteil.

Die Vorbereitung wird nur durchgeführt nach
einem Systemstart oder wenn die Netzkonfiguration oder
der Netzzustand geändert wurde. Zur Vorbereitung benötigt die Netzsteuereinhiet folgende Informationen,
die über das Video-Terminal eingegeben werden:

- das Zeitintervall zwischen zwei
  Synchronisationen

- Angaben darüber, welche Basisstationen
  miteinander Funkverbindung haben und
  ihre Distanzen

- Angaben, welche Basisstationen die ersten Master sein sollen. Fehlen diese Angaben, werden die ersten Master durch die Netzsteuereinheit bestimmt.

Aufgrund dieser Information plant die Netzsteuereinheit den genauen Ablauf der Synchronisation. Das Ziel dabei ist, die Synchronisation in möglichst kurzer Zeit ablaufen zu lassen.

Zunächst wird geprüft, ob sich das Netz in voneinander unabhängige Teilnetze aufteilen lässt, die sich gleichzeitig synchronisieren lassen. Wenn dies möglich ist, wird für jedes Gebiet ein separater Ablaufplan erstellt.

Als zweiter Schritt wird der erste Master jedes Gebietes so bestimmt, dass eine minimale Anzahl Synchronisationsphasen resultiert. Aus dem verwendeten Algorithmus ergibt sich gleichzeitig der Ablaufplan.

Die notwendigen Informationen werden anschliessend an die Basisstationen übermittelt. Insbesondere muss jeder Basisstation mitgeteilt werden, auf welchen Master sie sich synchronisieren soll. Dies geschieht mittels einer Zeitangabe.

Für die Durchführung der Synchronisation gibt die Netzsteuereinheit einen entsprechenden Startbefehl an die Basisstationen. Zugleich gibt die Netzsteuereinheit zum Zweck einer ersten groben Synchronisation den Stand ihrer Uhr bekannt, der von den Basisstationen übernommen wird. Die Uhren der Basisstationen und diejenige der Netzsteuereinheit stimmen damit nur auf ein paar Sekunden genau überein. Der erste Master sendet darauf seine Synchronisationsmeldung und alle Basisstationen, die sie empfangen können, synchronisieren sich darauf. Für den Empfang der Synchronisationsmeldung schalten die Slaves jeweils ihre Antenne vom Senderausgang auf den Empfängereingang um. Die Sender
der Basisstationen sind nur dann eingeschaltet, wenn
eine Meldung zum Senden vorliegt.

Die Synchronisationsmeldung ist so beschaffen, dass die auf die Rufempfänger keinen Einfluss hat.
Sie enthält u.a. die schon erwähnte 1010... Folge sowie
einen Zähler, der angibt, wieviel Zeit seit Beginn der
Synchronisation vergangen ist. Die Slaves vergleichen
nun den Zählerstand in der Synchronisationsmeldung mit
der Zeitangabe, die sie während der Synchronisationsvorbereitung von der Netzsteuereinheit erhalten haben.
Stimmen die beiden Zeiten überein, gilt die Basisstation als synchronisiert, andernfalls wartet sie auf
eine neue Synchronisationsmeldung. Die Uhr der Basisstation wird nach dem Zählerstand in der Synchronisationsmeldung gerichtet.

Ist ein Slave synchronisiert, wird er
selber zum Master und sendet seinerseits eine Synchronisationsmeldung, wobei natürlich der darin enthaltene
Zählerstand erhöht wird.

Am Schluss der Synchronisation gibt die Netzsteuereinheit einen Stopbefehl an die Basisstationen.

Hat eine Basisstation keine Synchronisationsmeldung empfangen, übermittelt sie einen entsprechenden
Alarm an die Netzsteuereinheit.

Damit haben nun alle Basisstationen die
Zeit ihres ersten Masters übernommen,und ihre Antennensignale sind synchronisiert.

Damit die Rufmeldungen zur richtigen Zeit
gesendet werden, berechnet die Netzsteuereinhiet vor
ihrer Einspeisung ins Netzwerk ihren frühest möglichen
Sendezeitpunkt und schickt diese Information zusammen
mit der Rufmeldung zu den Basisstationen.

Die Vorbereitung der Synchronisation ist bezüglich Zeitbedarf der Netzsteuereinheit recht aufwendig. Da sie aber nur selten durchgeführt wird, kann die dafür benötigte Zeit im praktischen Betrieb vernachlässigt werden.

Die Befehle für Start und Stop der Synchronisation können bereits übermittelt werden, während die Basisstationen noch Rufmeldungen senden. Somit ist für diese Befehlsübermittlung kein zusätzlicher Zeitaufwand nötig.

Eine Synchronisationsphase dauert genau 8/16 = 0,5 Sekunden. Wenn man annimmt, dass für die Synchronisation des ganzen Netzes 25 Phasen nötig sind (was nur für ganz grosse Netze notwendig sein wird), würde die Synchronisation 12,5 Sekunden dauern. Bei einem Synchronisationsintervall von 12 Minuten ergibt sich somit ein Zeitbedarf von ca. 1,7 % der Sendezeit.

Weil das Netzwerk die Fähigkeit hat, Rufe zwischenzuspeichern und mehrere Sendungen zu einer zusammenzufassen, hat die Synchronisation auf den Durchsatz einen sehr geringen Einfluss, sofern das Netz nicht bereits bis an die Grenze seiner Kapazität belastet ist.

Durch das erfindungsgemässe Verfahren ist die Synchronisation der gesendeten Signale vollständig unabhängig von der Länge und den Eigenschaften der Verbindungsleitungen zwischen der Zentrale und den Sendern. Es ist keinerlei Justierung notwendig. Die Synchronisation erfolgt mittels spezieller Synchronisationsmeldungen, die über die ohnehin vorhandenen Sender ausgestrahlt werden, allerdings müssen die Basisstationen mit einem Empfänger ausgerüstet sein. Die Zeit, die periodisch für die Synchronisation benötigt wird, ist in einem Netz, das nicht zu gross ist und nicht dauernd an der Grenze seiner Kapazität betrieben wird, vernachlässigbar.

Patentansprüche
-----------------------------------

1. Verfahren zur Synchronisation einer Mehrzahl taktgesteuerter Sende-Empfangseinrichtungen, dadurch gekennzeichnet, dass von einer synchronisierenden Sende-Empfangseinrichtung Synchronisationsdaten an mindestens eine zu synchronisierende Sende-Empfangseinrichtung abgegeben werden, dass die Empfänger- und Senderlaufzeit der zu synchronisierenden Sende-Empfangseinrichtung gemessen wird und dass mittels der Snychronisationsdaten und der Messwerte der Sendetakt der zu synchronisierenden Sende-Empfangseinrichtung beeinflusst wird.

2. Verfahren nach Anspruch 1, gekennzeichnet durch das Senden einer Synchronisationsmeldung durch die synchronisierende erste Sende-Empfangseinrichtung, den Empfang der Synchronisationsmeldung durch mindestens eine zu synchronisierende zweite Sende-Empfangseinrichtung zur Grobsynchronisierung derselben mittels Information aus der Synchronisationsmeldung, das Senden und Empfangen einer Messmeldung durch die zweite Sende-Empfangseinrichtung, Ermitteln der Sender- und Empfängerlaufzeit der zweiten Sende-Empfangseinrichtung aus der Zeitdifferenz zwischen der gesendeten und der empfangenen Messmeldung und Korrektur des Sendetaktes der zweiten Sende-Empfangseinrichtung abhängig von der ermittelten Zeitdifferenz.

3. Verfahren nach Anspruch 1 oder 2, dadurch gekennzeichnet, dass eine synchronisierte Sende-Empfangseinrichtung zur synchronisierenden Sende-Empfangseinrichtung für mindestens eine weitere Sende-Empfangseinrichtung wird.

4. Verfahren nach Anspruch 2 oder 3, dadurch gekennzeichnet, dass die Messmeldung als Synchronisationsmeldung dient.

5. Verfahren nach einem der vorangehenden Ansprüche, dadurch gekennzeichnet, dass zusätzlich die Signallaufzeiten zwischen der synchronisierenden und der zu synchronisierenden Sende-Empfangseinrichtung zur Korrektur des Sendetaktes verwendet werden.

6. Verfahren nach einem der Ansprüche 2 bis 4, dadurch gekennzeichnet, dass die Synchronisations- und Messmeldung aus digitalen Datensignalen besteht.

7. Sende-Empfangseinrichtung zur Durchführung des Verfahrens nach Anspruch 1, dadurch gekennzeichnet, dass die Sende-Empfangseinrichtung eine Einrichtung zum Empfang des eigenen Antennensendesignals, eine Einrichtung zum Vergleich des Sendesignals am Sendereingang mit dem Empfangssignal am Empfängerausgang und eine Einrichtung zur Korrektur des Sendetaktes abhängig von der Vergleichseinrichtung aufweist.

8. Sende-Empfangseinrichtung nach Anspruch 7, dadurch gekennzeichnet, dass die Vergleichseinrichtung einen Zähler aufweist, welcher vom Sendesignal startbar und vom Empfangssignal anhaltbar ist.

9. Sende-Empfangseinrichtung nach Anspruch 7 oder 8, dadurch gekennzeichnet, dass die Korrektureinrichtung zur Verarbeitung weiterer Daten, insbesondere gespeicherter Laufzeitdaten für die Entfernung zwischen synchronisierender und zu synchronisierender Sende-Empfangseinrichtung, ausgebildet ist.

10. Sende-Empfangseinrichtung nach einem der vorangehenden Ansprüche, dadurch gekennzeichnet, dass in der Vergleichs- und Korrektureinrichtung ein Mikroprozessor verwendet wird.

11. Anwendung des Verfahren nach Anspruch 1 bei einem Funkrufnetz.

12. Anwendung nach Anspruch 10, wobei das Funkrufnetz eine mit dem öffentlichen Telefonnetz verbundene Funkrufzentrale, sowie ein Rufnetzwerk mit einer Netzsteuereinheit und einer damit verbundenen Mehrzahl von Sendergruppensteuereinrichtungen aufweist, welche jeweils mit einer Mehrzahl von Sende-Empfangseinrichtungen verbunden sind, dadurch gekennzeichnet, dass die Netzsteuereinheit zur Bestimmung einer ersten synchronisierenden Sende-Empfangseinrichtung und des Ablaufs der Synchronisation ausgestaltet ist.

13. Anwendung nach Anspruch 11, dadurch gekennzeichnet, dass die Netzsteuereinheit zur Bestimmung mehrerer gleichzeitig zu synchronisierender Teilnetze des Funkrufnetzes ausgestaltet ist, um den Zeitaufwand für die Synchronisation zu verringern.

Figur 1

Figur 2

0 198 448

Figur 3

Figur 4

0 198 448

2/2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | EP-A-0 040 731 (LICENTIA PATENT-VERWALTUNGS-GmbH) <br> * Seite 9, Zeile 17 - Seite 16, Zeile 7 * | 1,5,7, 11 | H 04 B 7/24 <br> H 04 H 3/00 |
| A | US-A-4 255 814 (OSBORN) <br><br> * Zusammenfassung; Seite 6, Zeilen 43-61 * | 1,5,9, 10 | |
| A | WO-A-8 402 436 (TELEFONAKTIEBOLAGET LM ERICSSON) <br> * Seite 4, Zeile 7 - Seite 7, Zeile 28 * | 1-3,7, 11-13 | |
| A | EP-A-0 118 710 (ANT) <br><br> * Seite 4, Zeile 19 - Seite 6, Zeile 13 * | 1,5,7, 11 | RECHERCHIERTE SACHGEBIETE (Int Cl.4) <br><br> H 04 B <br> H 04 H |

Der vorliegende Recherchenbericht wurde für alle Patentansprüche erstellt

| Recherchenort <br> DEN HAAG | Abschlußdatum der Recherche <br> 02-07-1986 | Prüfer <br> VERSLYPE J.P. |
|---|---|---|

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82